# EUROPEAN PATENT SPECIFICATION

(11) **EP 0 936 777 B1**
(45) Date of publication and mention of the grant of the patent: **13.08.2003**
(21) Application number: 98301053.9
(22) Date of filing: 13.02.1998
(51) Int. Cl.: H04L 12/28, H04Q 7/22, H04L 29/06

(54) **Integrated wireless telecommunication and local area network system**
Integriertes System der schnurlosen Telekommunikation und eines lokalen Netz
Système intégré de télécommunication sans fil et de réseau local

(43) Date of publication of application: 18.08.1999
(73) Proprietor: LUCENT TECHNOLOGIES INC., Murray Hill, New Jersey 07974-0636 (US)
(72) Inventor: Buswell, John S., Badhoevedorp (NL); Stacey, Lorraine Michelle, Swindon, Wiltshire SN5 8NU (GB); Brown, Philip John, Swindon, Wiltshire SN5 9ZG (GB)
(74) Representative: Funnell, Samantha Jane

(56) References cited:
- GB-A- 2 283 154
- US-A- 4 692 918
- HILLS A ET AL: "A WIRELESS DATA NETWORK INFRASTRUCTURE AT CARNEGIE MELLON UNIVERSITY" IEEE PERSONAL COMMUNICATIONS, vol. 3, no. 1, 1 February 1996, pages 56-63, XP000554693
- JOHNSON D B ET AL: "PROTOCOLS FOR ADAPTIVE WIRELESS AND MOBILE NETWORKING" IEEE PERSONAL COMMUNICATIONS, vol. 3, no. 1, 1 February 1996, pages 34-42, XP000554691

## Description

This invention relates to a method and apparatus for integrating wireless LAN and mobile telecommunications and, in particular for an integrated Wireless LAN and telecommunication data card. The invention also relates to a network system, including at least one terminal and means for connecting to said network system.

The user of a portable computer or small mobile data terminal may be connected to a Local Area Network (LAN) by a number of different systems. The LAN may provide for wireless connection, using a Wireless LAN cord and an aerial. Alternative, access via a telephone dial-up service, using for example a telecommunication data card and a mobile telephone, or an integrated card, may be provided to the user when outside the range of the wireless LAN. These systems provide the user with a degree of flexibility, but require the user to log-on to the LAN each time the mode of access (or interface) is altered.

There is a need for network access systems which are flexible, and yet require the minimum of hardware, since this increases the weight and the cost.

It is known from US patent US-A-4692918 to provide a network system including a network, a terminal for telecommunications, means for connecting the terminal to the network via two interfaces, means for switching the network connection between one interface and the other, a network proxy, and a terminal proxy, the proxies being adapted to redirect data packets in the link layer and provided to support seamless switching between one interface and the other.

The present invention is characterised over the disclosure of US-A-4692918 in that said terminal being adapted for wireless telecommunications and in that of the two interfaces one interface is a wireless LAN interface and one interface is a cellular data interface, the terminal having one link layer address which is used by the terminal regardless of the connecting interface.

The invention thus provides simple, efficient and light weight method and apparatus for connecting to a network. The invention enables the user to stay connected to the network whilst roaming inside a building and whilst away from the building. The invention switches seemless between the two connections and enables a single card to be utilised to perform both functions. Using a single card has additional benefits in terms of power requirements and battery life.

The invention provides a mechanism that switches between communication interfaces without affecting the higher layer communications protocols, either in the mobile terminal or in the network. To the upper protocol layers, the invention provides a single network interface, regardless of the particular mode of connection.

The network proxy and the terminal proxy are functional blocks within the network architecture which support for seamless switching. The proxies may be tailored to each particular network and terminal combination.

Embodiments of the invention are described below, and with refrence to the following figures, in which:

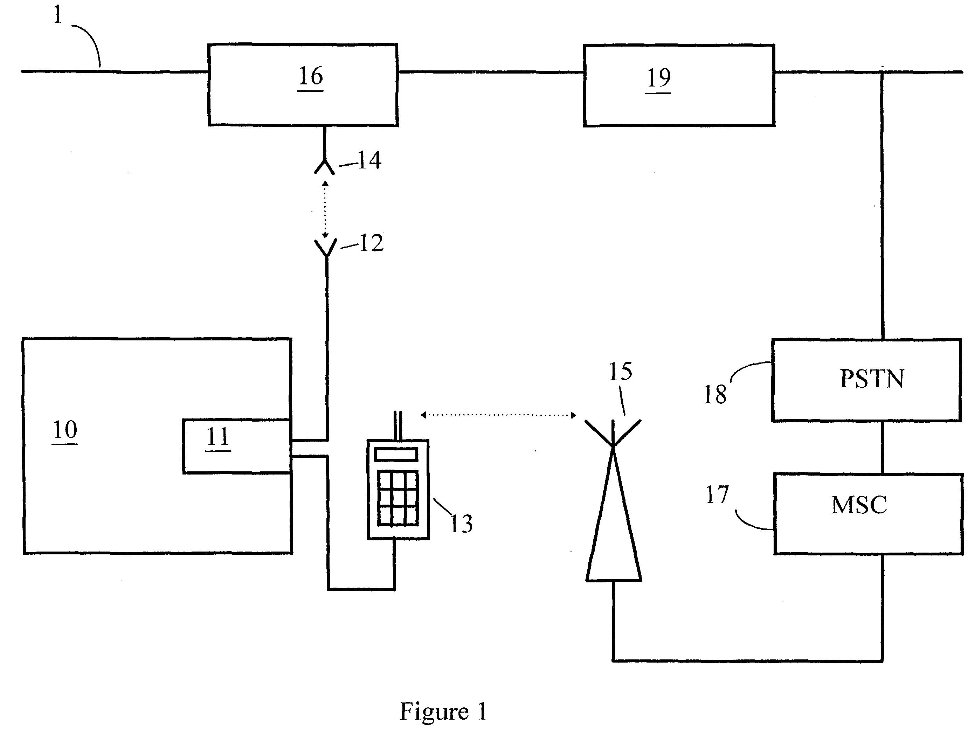

Figure 1 shows in outline a network configuration.

The information related to the capabilities of the network, are stored in a network proxy. The information relating to the capabilities of a terminal, 10, is stored in a terminal proxy. The terminal may connect to the network using conventional wireless LAN connection, using the combined data and Wireless LAN card 11, antennae 12 and 14 and the wireless LAN access point 16. Once connected, the terminal may communicate with other devices on the network via an ethernet backbone 1. Alternatively, the terminal may connect to the network using a telephone dial up service, via the data card 11 and cellular mobile telephone. The dialup service allows the terminal to log-on to the network, using the cellular mobile and public switched telephone services, 15, 17 and 18 via a dial up server 19.

To the upper protocol layers of the terminal, the combined card 11 appears as a single LAN interface, regardless of whether the terminal is currently connected via the wireless LAN or cellular data network. This means that none of the higher layer protocols need to modify their behaviour, or be aware of the mobile terminals movement. In the following examples, an ethernet network system running TCP/IP is used as an example.

The switching mechanism is responsible for hiding the movement of the mobile terminal from the higher protocol layers. When the mobile terminal is communicating via the wireless LAN interface, the application transmits packets (including address resolution requests) as normal.

The switching mechanism communicates with the wireless LAN interface and cellular data interface to determine the current signal strength of the two interfaces. The decision to switch can be made based upon a number of factors. One possibility is that when the wireless LAN signal strength drops below a given threshold the switching function activates the cellular data interface and then deactivates the wireless LAN interface. Switching decisions can also be made on the basis of: measured error rates; bandwidth; or cost.

When the switching mechanism decides to perform a switch two scenarios are possible: (1) switching from the wireless LAN interface to the cellular data interface or (2) switching from the cellular data interface to the wireless LAN interface. The functions performed by the switching function in both cases are described below:

### 1) Moving from the wireless LAN to the cellular data network

Initially the switching function activates the cellular data interface, registers with the cellular data network, and creates a dial-up connection to the configured address of the dial-up server. During the dial-up process the dial-up server will inform the mobile terminal of the IP address it should use for this interface. The switching function must then send a mobile IP message to the network phone indicating the mobile terminals currently active IP address. The network proxy will then send a gratuitous ARP message over its IP subnetwork saying that traffic destined for the mobile terminal's home address should be sent to the home agent. The network proxy will thus receive data destined for the mobile terminal, this is then encapsulated in an IP header containing the dial-up interface IP address and transmitted to the mobile terminal via the dial-up server. When the integrated card receives the IP packet it must strip off the outer header and pass the packet up to the upper protocol layers. This means the upper protocol layers will always send and receive traffic with the wireless LAN IP address. When the wireless LAN interface is activated again, the card must transmit a gratuitous ARP to the network containing the wireless LAN IP and MAC addresses.

At this point, the wireless LAN interface on the card should be deactivated. Traffic arriving from the upper layers of the mobile terminal protocol stack will now be forwarded via the cellular data interface. The higher layer protocols will still assume that the mobile terminal is attached to a LAN, and hence will generate ARP requests for terminals residing on the same subnet as the wireless LAN. Via the dial-up connection from the cellular data interface, MAC addresses are not required since this is a point-to-point connection to the dial-up server. However the higher protocol layers expect a response. The following alternative approaches can be followed to provide the higher layers with a response so that they will continue to forward data traffic to the card for transmission.
∗ The switching function captures the ARP request and generates an ARP response with a dummy MAC address which it forward to the higher layer protocols. This will enable the upper protocol layers to forward the queued traffic in a timely manner. The ARP request can then be discarded.
∗ An alternative is to still forward the fake ARP response to the higher layers but to queue the ARP request so that when the switching function activates the wireless LAN interface again, all of the queued ARP requests can be transmitted. The responses would then be forwarded to the upper layer protocols to overwrite the ARP cache containing the fake MAC address.
∗ An alternative is to send the fake ARP response to the higher layer protocols, but to also forward the ARP requests to the dial-up server. The dial-up server should then forward it over the local subnet to obtain a response. When the dial-up server receives a response it should forward it to the mobile terminal. In this case the integrated card should forward the ARP response to the higher protocol layers to update the ARP translation information. This approach has the advantage that when the mobile terminal moves back to the wireless LAN it will already contain the correct ARP information.

Traffic from the mobile terminal will travel to the rest of the network via the cellular data interface. Traffic destined for the mobile terminal will be received by the dial-up server and forwarded to the mobile terminal.

### 2) Moving from the cellular data network to the wireless LAN

When the switching function makes the decision to move to the wireless LAN interface, this interface should be re-activated. When the wireless LAN interface is active the mobile terminal must send a gratuitous ARP message indicating its current IP address and MAC address. It must also send a message to the home agent indicating that it is now connected via the wirelss LAN interface and what its current IP and MAC address is. The network proxy should then broadcast a gratuitous ARP stating the current mobile terminal's IP address and MAC address. The switching function should then trigger the necessary local ARP recovery function chosen from the alternatives above. At this point the cellular data interface should be de-activated. Traffic from the mobile terminal will then flow via the wireless access point to the rest of the subnet. Traffic arriving from other hosts will be forwarded to the mobile terminal by the wireless LAN access point.

The wireless LAN access point and dial-up server may be integrated into a single device which also implements the network proxy. In this case, all traffic to and from other hosts will always be routed via the same device, regardless of whether the integrated card wireless LAN or cellular data interface is active. This means that when the active interface changes gratuitous ARPs no longer need to be transmitted over the network. In this case when the switching function decides to change the active interface it sends a message to the integrated wireless forwarding device indicating the new active interface. This integrated forwarding device is then responsible for forwarding the traffic via this new interface. This has the benefit that the rest of the network is unaware of which interface on the integrated card is currently active. It also means that traffic follows an optimal route to the mobile terminal rather than having to be forwarded through multiple network devices. It also reduces the complexity of the switching function since mobile IP does not need to be implemented within the card.

The following proxies use the highest preferred network that has an acceptable signal strength. If a more preferred network becomes available again, the proxy swaps back to it. If the network currently in use becomes unacceptable and there are no higher preferred networks available the proxy drops to the next lower preferred network if that is available.

### Terminal proxy

when connected to the wireless LAN
while the wireless lan signal strength is greater than an acceptable level
continuously gather the wireless lan signal strength and apply a smoothing function to remove transient signal strength fluctuations
continuously gather the dial-up network signal strength and apply a smoothing function to remove transient signal strength fluctuations
forward any data received from the terminal's higher layers over the wireless lan interface
forward data received from the wireless lan interface to the higher layers of the terminal
   when the wireless lan signal strength is below an acceptable level
send a handover signal to the network proxy indicating that the terminal is moving from a wireless lan to a dial-up connection
create a dial-up connection to the network proxy
when the dial-up connection is created deactivate the wireless lan interface when connected to the dial-up interface
while the wireless lan signal strength is below an acceptable level and the dial-up signal strength is above an acceptable network (NB if these are the only two available networks a signal strength above zero may be acceptable)
continuously gather the wireless lan signal strength and applying a smoothing function to remove transient signal strength fluctuations
continuously gather the dial-up network signal strength and apply a smoothing function to remove transient signal strength fluctuations
forward any data received from the terminal's higher layers over the dial-up interface including address resolution requests
forward data received from the dial-up interface to the higher layers of the terminal including address resolution responses when the wireless lan signal strength is above an acceptable level
send a handover signal to the network proxy indicating that the terminal is moving from a dial-up connection to a wireless LAN connection
activate the wireless LAN interface
tear-down the dial-up connection to the network proxy when both the wireless LAN and dial-up signal strengths are below an acceptable level
inform the higher layers that no networks are currently available
inform the network proxy no networks are currently available
tear down the dial-up connection

### Network proxy (for wireless LAN bridge, dial-up server and mobility support)

if the proxy receives data for terminal x
   if terminal x is accessible via the wireless LAN
   forward data over the wireless LAN interface to the terminal
   otherwise if terminal x is accessible via the dial-up interface
   forward data over the dial-up interface to the terminal
   otherwise if the terminal is not accessible by any network
   inform the sender of the packet that the terminal is not accessible
   if the proxy receives data from terminal x
   forward the data to the destination
   if the proxy receives a handover request from terminal x
   if the terminal is moving to a dial-up connection
   add the terminal to the list of current dial-up terminals
   when the dial-up connection is active and the terminal was previously connected to a wireless LAN interface
   remove the terminal from the list of current wireless LAN terminals
   if the terminal is moving to a wireless LAN connection
   add the terminal to the list of current wireless LAN terminals
   remove the terminal from the list of current dial-up terminals

## Claims

1. A network system including a network, a terminal for telecommunications, means for connecting the terminal to the network via two interfaces, means for switching the network connection between one interface and the other, a network proxy, and a terminal proxy, the proxies being adapted to redirect data packets in the link layer and provided to support seamless switching between one interface and the other, **characterised in that** said terminal being adapted for wireless telecommunications and **in that** of the two interfaces one interface is a wireless LAN interface and one interface is a cellular data interface, the terminal having one link layer address which is used by the terminal regardless of the connecting interface.

2. A network system as claimed in claim 1 **characterised in that** the network proxy hides the switching from other devices connected to the network.

3. A network system as claimed in claim 1 **characterised in that** the terminal proxy hides the switching from higher layers in the terminal.

## Patentansprüche

1. Netzsystem mit einem Netz, einem Endgerät für Telekommunikation, Mitteln zum Verbinden des Endgeräts mit dem Netz über zwei Schnittstellen, Mitteln zum Umschalten der Netzverbindung zwischen einer Schnittstelle und der anderen, einem Netz-Proxy und einem Endgeräte-Proxy, wobei die Proxys zum Umleiten von Datenpaketen auf der Sicherungsschicht geeignet sind und bereitgestellt werden, um ein nahtloses Umschalten zwischen einer Schnittstelle und der anderen zu unterstützen, **dadurch gekennzeichnet, daß** das Endgerät für drahtlose Telekommunikation geeignet ist und daß eine Schnittstelle von den zwei Schnittstellen eine drahtlose LAN-Schnittstelle und eine Schnittstelle eine Schnittstelle für Zellularfunkdaten ist, wobei das Endgerät eine Sicherungsschichtadresse aufweist, die vom Endgerät ungeachtet der verbindenden Schnittstelle benutzt wird.

2. Netzsystem nach Anspruch 1, **dadurch gekennzeichnet, daß** der Netz-Proxy das Umschalten vor anderen mit dem Netz verbundenen Vorrichtungen verbirgt.

3. Netzsystem nach Anspruch 1, **dadurch gekennzeichnet, daß** der Endgeräte-Proxy das Umschalten vor höheren Schichten im Endgerät verbirgt.

## Revendications

1. Système de réseau comportant un réseau, un terminal pour télécommunications, un moyen pour connecter le terminal au réseau via deux interfaces, un moyen pour commuter la connexion au réseau entre une interface et l'autre, un proxy de réseau et un proxy de terminal, les proxys étant aptes à réacheminer des paquets de données dans la couche de liaison et étant prévus pour assurer la commutation sans discontinuité entre une interface et l'autre, **caractérisé en ce que** ledit terminal est apte aux télécommunications sans fil et **en ce que**, parmi les deux interfaces, une interface est une interface LAN sans fil et une interface est une interface de données cellulaire, le terminal comportant une adresse de couche de liaison qu'il utilise quelle que soit l'interface de connexion.

2. Système de réseau selon la revendication 1, **caractérisé en ce que** le proxy de réseau tient la commutation cachée d'autres dispositifs connectés au réseau.

3. Système de réseau selon la revendication 1, **caractérisé en ce que** le proxy de terminal tient la commutation cachée de couches supérieures dans le terminal.
